# EUROPÄISCHE PATENTANMELDUNG

(11) **EP 1 586 244 A1**
(43) Veröffentlichungstag der Anmeldung: **19.10.2005**
(21) Anmeldenummer: 04009084.7
(22) Anmeldetag: 16.04.2004
(51) Int. Cl.: A23L 1/30

(54) **Zubereitungen für die orale Aufnahme**

(71) Anmelder: Cognis IP Management GmbH, 40589 Düsseldorf (DE)
(72) Erfinder: Rull Prous, Santiago, 08034 Barcelona (ES); Alaoui Ismaili, Smail, 08290 Cerdanyola del Vallès (ES); Blasquez Fernandez, José, 08228 Terrassa (ES); Fabry, Bernd, 41352 Korschenbroich (DE)

(57) **Zusammenfassung**

Vorgeschlagen werden Zubereitungen für die orale Aufnahme, enthaltend
(a) physiologisch aktive Fettsäuren oder deren Ester und
(b) Wirkstoffe, die die Fettsäuren vor oxidativer Metabolisierung schützen.

## Beschreibung

### Gebiet der Erfindung

Die Erfindung befindet sich auf dem Gebiet der Nahrungsmittelergänzungsstoffe und betrifft Zubereitungen auf Basis von physiologisch aktiven, vorzugsweise ungesättigten Fettsäuren, die durch Zusatz ausgewählter Wirkstoffe vor einer zu raschen oxidativen Metabolisierung im Körper geschützt sind, entsprechende Nahrungsmittelzubereitungen sowie die Verwendung der speziellen Wirkstoffe.

### Stand der Technik

Fettsäuren besitzen für den menschlichen Körper eine essentielle Bedeutung, da sie eine Vielzahl von biochemischen Prozessen involviert sind. Die wichtigste Funktion der Fettsäuren ist sicher die eines Brennstoffs. Daneben verfügen aber spezielle Typen, insbesondere solchen, die über lange, mehrfach ungesättigte Kohlenwasserstoffketten verfügen, über physiologische Eigenschaften, die im Bereich der Nahrungsmittelergänzungsstoffe ("Functional Food", "Dietary Supplements") genutzt werden. So besitzt beispielsweise konjugierte Linolsäure (CLA) einen positiven Einfluss auf den Fettstoffwechsel, was im Bereich der Ernährung zur Gewichtskontrolle und Gewichtsreduzierung ausgenutzt wird. Omega-3-Fettsäuren, die auch gerne als "Fischfettsäuren" bezeichnet werden, haben eine coronale Wirkung und werden zur Herzinfarktprophylaxe eingesetzt.

Ein allgemein bekannter Nachteil besteht jedoch darin, dass gerade ungesättigte Fettsäuren nach oraler Aufnahme sehr rasch metabolisiert werden, d.h. es findet ein oxidativer Abbau bzw. eine oxidative Veränderung statt, die nicht nur an der funktionellen Gruppe, sondern insbesondere auch an der Doppelbindung ansetzt [vgl. z.B. Yang et al. **J.Agric.Food Chem. Vol. 48, p3072-3076 (2000)]**. Überträgt man diese Erkenntnisse auf das Schicksal der Fettsäuren nach oraler Aufnahmen, dann ist die Folge, dass diese sehr rasch ihre für den Körper nützlichen Eigenschaften verlieren und metabolisiert werden, so dass der Verbraucher unter Umständen von der Einnahme überhaupt keinen Nutzen erfährt oder die Wirkung sich nur dann einstellt, wenn die Fettsäuren in sehr hohen Haben dosiert werden.

Die Aufgabe der vorliegenden Erfindung hat folglich darin bestanden, Zubereitungen für die orale Aufnahme auf Basis physiologisch aktiver Fettsäuren zur Verfügung zu stellen, die sich dadurch auszeichnen, dass sie vom Körper rasch resorbiert werden, deren oxidativer Abbau bzw. deren oxidative Veränderung unter physiologischen Bedingungen jedoch inhibiert oder wenigstens merklich verzögert wird.

### Beschreibung der Erfindung

Gegenstand der Erfindung sind Zubereitungen für die orale Aufnahme, enthaltend
(a) physiologisch aktive Fettsäuren oder deren Ester und
(b) Wirkstoffe, die die Fettsäuren vor oxidativer Metabolisierung schützen.

Überraschenderweise wurde gefunden, dass die Zugabe schon von sehr geringen Mengen geeigneter physiologisch akzeptabler Wirkstoffe, wie beispielsweise Tocopherol (Vitamin A), Carotinverbindungen (Vitamin E) und insbesondere Polyphenolen; speziell von Typ der Catechine, Flavonoide und oligomeren Procyanolidine, physiologisch aktive Fettsäuren wie insbesondere konjugierte Linolsäure (CLA) oder omega-3-Fettsäuren vor zu raschem oxidativem Abbau oder Veränderung durch den Metabolismus schützen. Es liegt auf der Hand, dass durch die Verzögerung der Metabolisierung, die mit der oralen Aufnahme der ungesättigten Fettsäuren für den Körper verbundenen Wirkungen länger genutzt werden können.

### Physiologisch aktive Fettsäuren und deren Ester

Ein gemeinsames Kriterium der physiologisch aktiven Fettsäuren, die als Komponente (a) in Betracht kommen, besteht darin, dass sie über einen hinreichend langen Lipidrest und eine ausreichende Zahl von Doppelbindungen verfügen. Für diesen Zweck eignen sich daher insbesondere solche Fettsäuren die 18 bis 26 Kohlenstoffatome und 2 bis 6 Doppelbindungen aufweisen.

In einer ersten Ausführungsform der Erfindung werden für diesen Zweck konjugierte Linolsäure (CLA), deren Ester - speziell solche mit niederen aliphatischen Alkoholen mit 1 bis 4 Kohlenstoffatomen - oder deren Glyceride, speziell die synthetischen Triglyceride eingesetzt. Dabei handelt es sich um bekannte Stoffe, die üblicherweise durch basenkatalysierte Isomerisierung von Distelöl oder entsprechenden Alkylestern und nachfolgende enzymatische Hydrolyse hergestellt werden. Es hat sich dabei als vorteilhaft erwiesen, wenn die CLA bzw. CLA-Derivate eine bestimmte Spezifikation erfüllen, gemäß der der Acylrest wenigstens 30 Gew.-% t10,c12-Isomere, wenigstens 30 Gew.-% c9,t11-Isomere und in Summe weniger als 1 Gew.-% 8,10-, 11,13- und t,t-Isomere aufweist. Entsprechende Produkte sind beispielsweise unter der Bezeichnung Tonalin® CLA-80 (Cognis) im Handel.

In einer zweiten alternativen Ausführungsform kommen als Komponente (b) auch sogenannte omega-3-Fettsäuren in Frage, die typisch 18 bis 26 und insbesondere 20 bis 22 Kohlenstoffatome enthalten und dabei wenigstens 4, bis hin zu 6 Doppelbindungen aufweisen. Auch solche Stoffe sind nach üblichen Methoden der organischen Chemie erhältlich, beispielsweise durch Umesterung von Fischöl, Harnstofffällung der erhaltenen Alkylester und nachfolgende Extraktion mit unpolaren Lösemitteln, wie beschrieben in der deutschen Patentschrift **DE 3926658 C2** (Norsk Hydro). Auf diese Weise werden Fettsäuregemische erhalten, die reich an omega-3 (all-Z)-5,8,11,14,17-eicosapentansäure (EPA) C 20 : 5 und (all-Z)-4,7,10,13,16,19-Docosahexansäure (DHA) C 22 : 6. sind. Solche Produkte sind beispielsweise unter der Bezeichnung Omacor® (Pronova) im Handel.

Die physiologisch aktiven Fettsäuren können jedoch nicht nur in Form ihrer Niedrigalkylester oder Glyceride, sondern auch ihrer Ester mit Sterolen eingesetzt werden. Die Sterolester haben den Vorteil, dass sie - ähnlich wie die Glyceride - leicht resorbiert und unter physiologischen Bedingungen ebenfalls leicht gespalten werden. Im Gegensatz zu den Glyceriden wird aber mit dem Sterol ein weiterer physiologisch aktiver Wirkstoff freigesetzt. Die Begriffe "Sterol" "Stanol" und "Sterin" sind dabei synonym zu verwenden und bezeichnen Steroide, die nur am C-3 eine Hydroxylgruppe und ansonsten keine Funktionen aufweisen. Zusätzlich können die 27 bis 30 Kohlenstoffatome umfassenden Sterole eine Doppelbindung, vorzugsweise in 5/6-Stellung enthalten. Die im Sinne der Erfindung bevorzugten Verbindungen sind die Ester der CLA oder der omega-3-Fettsäuren mit β-Sitosterol oder dessen Hydrierungsprodukt, dem β-Sitostanol.

### Wirkstoffe

Beispiele für Wirkstoffe, die in der Lage sind unter physiologischen Bedingungen den oxidativen Abbau bzw. die oxidative Veränderung der ungesättigten Fettsäuren zu inhibieren oder doch wenigstens wesentlich zu verlangsamen, sind Tocopherole, Carotinverbindungen sowie Polyphenole.
• Tocopherole
Unter dem Begriff Tocopherole, die als Komponente (b) in Betracht kommen, sind die in 2-Stellung mit einem 4,8,12-Trimethyltridecyl-Rest substituierten Chroman-6-ole (3,4-Dihydro-2H-1-benzopyran-6-ole) zu verstehen, die auch als Biochinone bezeichnet werden. Typische Beispiele sind die Plastichinone, Tocopherolchinone, Ubichinone, Bovichinone, K-Vitamine und Menachinone (z.B. 2-Methyl-1,4-naphthochinone). Vorzugsweise handelt es sich um die Chinone aus der Vitamin-E-Reihe, d.h. α-, β-, γ-, δ-und ε-Tocopherol, wobei letzteres noch über die ursprüngliche ungesättigte prenylseitenkette verfügt (s. Abbildung). 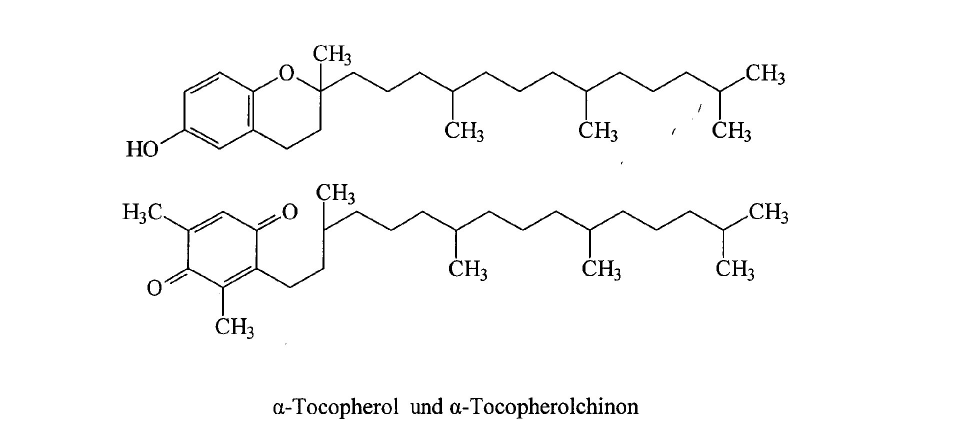
Daneben kommen auch Tocopherolchinone und -hydrochinone sowie die Ester der Chinone mit Carbonsäuren, wie z.B. Essigsäure oder Palmitinsäure in Frage. Der Einsatz von α-Tocopherol, Tocopherolacetat und Tocopherolpalmitat sowie deren Gemische ist bevorzugt.
• Carotinverbindungen
Unter Carotinverbindungen, die ebenfalls als Komponente (b) in Betracht kommen, sind im wesentlichen Carotine und Carotinoide zu verstehen. Carotine stellen eine Gruppe von 11- bis 12fach ungesättigten Triterpenen dar. Von besonderer Bedeutung sind die drei isomeren α-, β- und γ-Carotine, die alle über das gleiche Grundgerüst mit 9 konjugierten Doppelbindungen, 8 Methylverzweigungen (einschließlich möglicher Ringstrukturen) und einer β-Ionon-Ringstruktur an einem Molekülende verfügen und ursprünglich als einheitlicher Naturstoff angesehen worden waren. Nachstehend sind eine Reihe von Carotinverbindungen abgebildet, die als Komponente (b) in Frage kommen, ohne dass es sich um eine abschließende Aufzählung handelt. 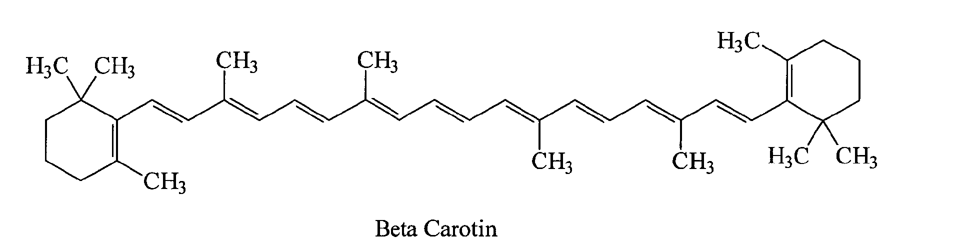 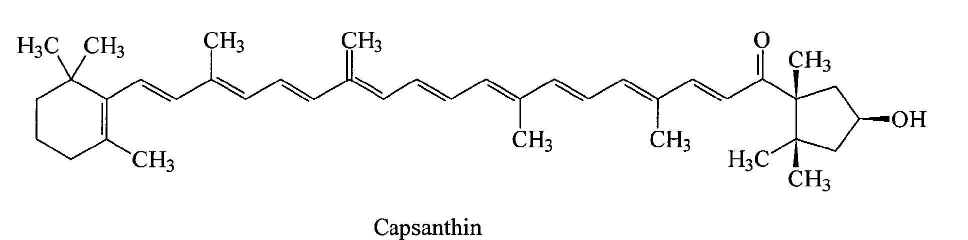 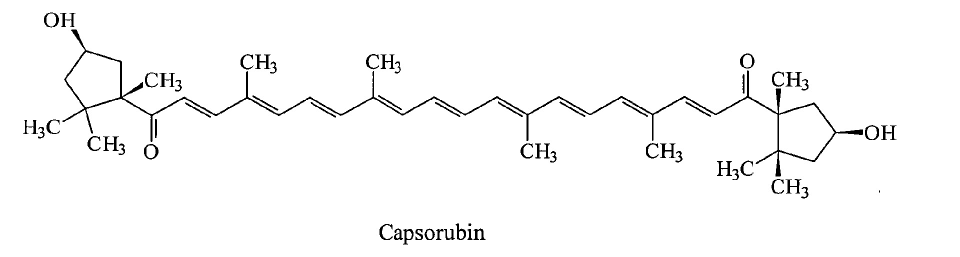 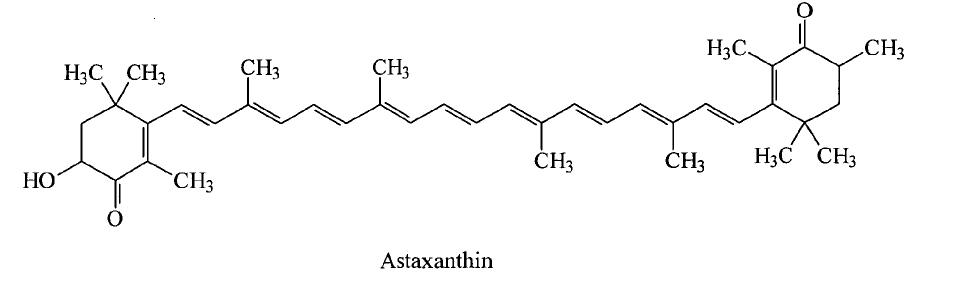
Neben den bereits genannten Isomeren kommen auch das δ-, ε- und ζ-Carotin (Lycopin) in Betracht, wobei freilich das ß-Carotin (Provitamin A) wegen seiner hohen Verbreitung von besonderer Bedeutung ist; im Organismus wird es enzymatisch in zwei Moleküle Retinal gespalten. Unter Carotinoiden versteht man sauerstoffhaltige Derivate der Carotine, die auch als Xanthophylle bezeichnet werden, und deren Grundgerüst aus 8 Isopreneinheiten (Tetraterpene) bestehen. Man kann sich die Carotinoide aus zwei C₂₀-Isoprenopiden derart zusammengesetzt denken, dass die beiden mittleren Methylgruppen in 1,6-Stellung zueinander stehen. Typische Beispiele sind das (3R,6'R)-β-ε-Carotin-3,3'-diol (Lutein), (3R,3'S,5'R)-3,3'-Dihydroxy-β,κ-carotin-6-on (Capsanthin), das 9'-cis-6,6'-Diapocarotindisäure-6'-methylester (Bixin), (3S,3'S,5R,5'R)-3,3'-Dihydroxy-κ,κ-carotin-6,6'-dion (Capsorubin) oder das 3S,3'S)-3,3'-Dihydroxy-β,β'-carotin-4,4'-dion (Astaxanthin).
Neben den Carotinen und Carotinoiden sollen unter dem Begriff Carotinverbindungen auch deren Spaltprodukte wie beispielsweise 3,7-Dimethyl-9-(2,6,6-trimethyl-1-cyclohexenyl)-2,4,6,8-nonatetraen-1-ol (Retinol, Vitamin A1) und 3,7-Dimethyl-9-(2,6,6-trimethyl-1-cyclohexenyl)-2,4,6,8-nonatetraenal (Retinal, Vitamin A1-Aldehyd) verstanden werden.
• Polyphenole
Unter den Polyphenolen haben sich zum Schutz der physiologisch aktiven Fettsäuren insbesondere Catechine, Flavonoide und oligomere Proanthocylidone (OPC) bewährt. Polyphenole vom Typ der Catechine und Flavonoide ("Teetannine") stellen die hauptsächlichen Wirkstoffe dar, die in Extrakten des Grünen Tees *(Camellia sinensis)* zu finden sind:

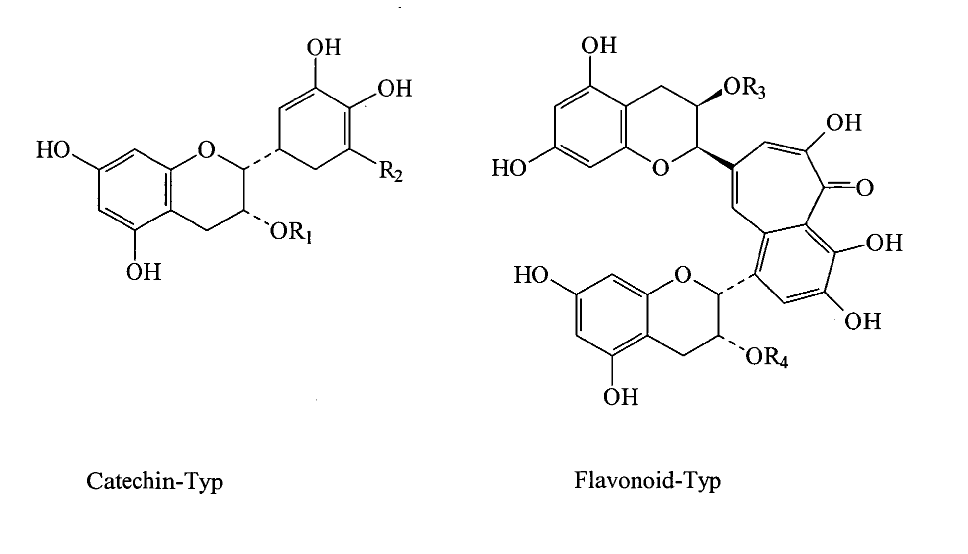

| | **R1** | **R2** | **R3** | **R4** |
|---|---|---|---|---|
| (-)-Epicatechin | H | H | | |
| (-) Epigallocatechin | H | OH | | |
| (-) Epicatechin gallate | Galloyl | H | | |
| (-) Epigallocatechin gallate | Galloyl | OH | | |
| Theflavin | | | H | H |
| Theaflavin monogallate A | | | Galloyl | H |
| Theaflavin monogallat B | | | H | Galloyl |
| Theaflavin digallate | | | Galloyl | Galloyl |

Die ersten oligomeren Procyanolidine, die ebenfalls als Polyphenol-Komponente (b) in Frage kommen, wurden von Masquellier aus Traubensaaten isoliert. Sie enthalten als Monomerbausteine die im Pflanzenreich weit verbreiteten Tannine. Chemisch betrachtet können zwei Typen von Tanninen unterschieden werden, nämlich kondensierte Formen zu denen auch das Procyanidin A2 gehört, und hydrolysierbare Tannine. Kondensierte Tannine, die auch als Flavolane bezeichnet werden, entstehen in der Biosynthese durch Kondensation von Monomeren, wie z.B. Catechin, Gallocatechin, Afzelechin (2-R, 3-S Typ Monomere) sowie Epicatechin, Epigallocatechin und Epiafzelechin (2-R, 3-R Typ Monomere). Durch Kondensation der Monomeren entstehen zunächst Dimere und dann höhere Oligomere, wobei die Kondensation durch Ausbildung einer C-C-Bindung in 4-8 bzw. 6-8-Position erfolgt. Im Fall der bevorzugten A2-Dimere vom Typ des Proanthocyanidin A2 gibt es eine doppelte Bindung, nämlich C2->O->C7 und C4->C8. Die Struktur ist in der folgenden Abbildung wiedergegeben: 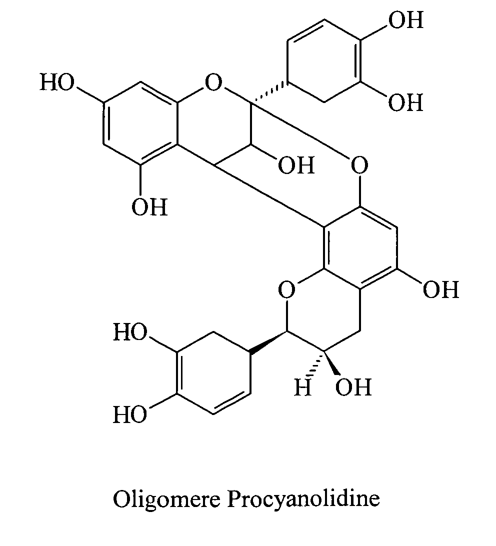
Die A2-Typ Proanthocyanidine sind weniger hydrolyseanfällig als die B-Typen. Im übrigen wird dieser Begriff synonym für die Gruppe der kondensierten Tannine verwendet, da diese unter dem Einfluss heißer Mineralsäuren Monomere abspalten. Die Proanthocyanidine können grundsätzlich synthetischer Natur sein, aus praktischer Sicht kommen jedoch vorzugsweise Anreicherungsprodukte mit einer wirksamen Menge der OPC bzw. A2-Dimeren in Frage, die durch Extraktion von bestimmten Früchten, Saaten, Pflanzen oder Pflanzenteilen gewonnen werden können. Als Quellen kommen insbesondere Grüner Tee *(Camellia sinensis),* Pinienrinde *(Pinia silvestris),* Traubensaat *(Vitis vinifera)* und daneben Litchi pericarp *(Litchi chinensis)* und Potentille *(Potentille erecta)* sowie deren Gemische in Betracht.

Die Wirkstoffe, insbesondere natürlich die Polyphenole, können in isolierter Form eingesetzt werden. Aus ökonomischen Gründen wird man jedoch Mischungen verwenden, die reich an den gewünschten Stoffen sind, wie man sie durch Extraktion der oben genannten Pflanzen gewinnt.

### Orale Zubereitungen

Wie eingangs geschildert, reichen schon sehr geringe Wirkstoffmengen aus, um die physiologisch aktiven ungesättigten Fettsäuren gegen oxidative Metabolisierung zu schützen. Somit enthalten die Zubereitungen die Komponenten (a) und (b) in der Regel im Gewichtsverhältnis 99,9 : 0,1 bis 80 : 20, vorzugsweise 99,5 : 0,5 bis 95 : 15 und insbesondere 99 : 1 bis 90 : 10.

Darüber hinaus können die Zubereitungen noch übliche Binder bzw. Träger, Geschmacks-und Farbstoffe enthalten.

Ein weiterer Gegenstand der vorliegenden Erfindung betrifft auch Endprodukte für den Verbraucher, die diese Zubereitungen enthalten. Speziell gemeint sind Nahrungsmittelzubereitungen wie beispielsweise Milchprodukte (z.B. Joghurts, Milk shakes etc.) oder Getränke (z.B. isotonische Sportlerdrinks), die sich dadurch auszeichnen, dass sie einen wirksamen Gehalt an physiologisch aktive Fettsäuren oder deren Ester aufweisen sowie Wirkstoffe enthalten, die die Fettsäuren vor oxidativer Metabolisierung schützen.

### Kapseln

In einer bevorzugten Ausführungsform der vorliegenden Erfindung liegen die Zubereitungen entweder makro- oder mikroverkapselt vor. Unter Makroverkapselung sind in diesem Zusammenhang beispielsweise handelsübliche Gelatinekapseln zu verstehen, die mit den erfindungsgemäßen Zubereitungen in flüssiger oder fester Form gefüllt sind, üblicherweise rund oder ellipsoid geformt sind und dabei einen größten Durchmesser von 1 bis 2 cm aufweisen.

Unter den Begriffen "Mikrokapsel" oder "Nanokapsel" werden vom Fachmann sphärische Aggregate mit einem Durchmesser im Bereich von etwa 0,0001 bis etwa 5 und vorzugsweise 0,005 bis 0,5 mm verstanden, die mindestens einen festen oder flüssigen Kern enthalten, der von mindestens einer kontinuierlichen Hülle umschlossen ist. Genauer gesagt handelt es sich um mit filmbildenden Polymeren umhüllte feindisperse flüssige oder feste Phasen, bei deren Herstellung sich die Polymere nach Emulgierung und Koazervation oder Grenzflächenpolymerisation auf dem einzuhüllenden Material niederschlagen. Nach einem anderen Verfahren werden geschmolzene Wachse in einer Matrix aufgenommen ("microsponge"), die als Mikropartikel zusätzlich mit filmbildenden Polymeren umhüllt sein können. Nach einem dritten Verfahren werden Partikel abwechselnd mit Polyelektrolyten unterschiedlicher Ladung beschichtet ("layer-by-layer"-Verfahren). Die mikroskopisch kleinen Kapseln lassen sich wie Pulver trocknen. Neben einkernigen Mikrokapseln sind auch mehrkernige Aggregate, auch Mikrosphären genannt, bekannt, die zwei oder mehr Kerne im kontinuierlichen Hüllmaterial verteilt enthalten. Ein- oder mehrkernige Mikrokapseln können zudem von einer zusätzlichen zweiten, dritten etc. Hülle umschlossen sein. Die Hülle kann aus natürlichen, halbsynthetischen oder synthetischen Materialien bestehen. Natürlich Hüllmaterialien sind beispielsweise Gummi Arabicum, Agar-Agar, Agarose, Maltodextrine, Alginsäure bzw. ihre Salze, z.B. Natrium- oder Calciumalginat, Fette und Fettsäuren, Cetylalkohol, Collagen, Chitosan, Lecithine, Gelatine, Albumin, Schellack, Polysaccharide, wie Stärke oder Dextran, Polypeptide, Proteinhydrolysate, Sucrose und Wachse. Halbsynthetische Hüllmaterialien sind unter anderem chemisch modifizierte Cellulosen, insbesondere Celluloseester und -ether, z.B. Celluloseacetat, Ethylcellulose, Hydroxypropylcellulose, Hydroxypropylmethylcellulose und Carboxymethylcellulose, sowie Stärkederivate, insbesondere Stärkeether und -ester. Synthetische Hüllmaterialien sind beispielsweise Polymere wie Polyacrylate, Polyamide, Polyvinylalkohol oder Polyvinylpyrrolidon.

Beispiele für Mikrokapseln des Stands der Technik sind folgende Handelsprodukte (in Klammern angegeben ist jeweils das Hüllmaterial) : *Hallcrest Microcapsules* (Gelatine, Gummi Arabicum), *Coletica Thalaspheres* (maritimes Collagen), *Lipotec Millicapseln* (Alginsäure, Agar-Agar), *Induchem Unispheres* (Lactose, mikrokristalline Cellulose, Hydroxypropylmethylcellulose); *Unicerin C30* (Lactose, mikrokristalline Cellulose, Hydroxypropylmethylcellulose), *Kobo Glycospheres* (modifizierte Stärke, Fettsäureester, Phospholipide), *Softspheres* (modifiziertes Agar-Agar) und *Kuhs Probiol Nanospheres* (Phospholipide) sowie *Primaspheres* und *Primasponges* (Chitosan, Alginate) und *Primasys* (Phospholipide).

Chitosanmikrokapseln und Verfahren zu ihrer Herstellung sind Gegenstand früherer Patenanmeldungen der Patentanmelderin **[WO 01/01926, WO 01/01927, WO 01/01928, WO 01/01929].** Mikrokapseln mit mittleren Durchmessern im Bereich von 0,0001 bis 5, vorzugsweise 0,001 bis 0,5 und insbesondere 0,005 bis 0,1 mm, bestehend aus einer Hüllmembran und einer die Wirkstoffe enthaltenden Matrix, können beispielsweise erhalten werden, indem man
(a1) aus Gelbildnern, kationischen Polymeren und Wirkstoffen eine Matrix zubereitet,
(a2) gegebenenfalls die Matrix in einer Ölphase dispergiert,
(a3) die dispergierte Matrix mit wässrigen Lösungen anionischer Polymere behandelt und gegebenenfalls dabei die Ölphase entfernt.
oder
(b1) aus Gelbildnern, anionischen Polymeren und Wirkstoffen eine Matrix zubereitet,
(b2) gegebenenfalls die Matrix in einer Ölphase dispergiert,
(b3) die dispergierte Matrix mit wässrigen Kationpolymerlösungen behandelt und gegebe- nenfalls dabei die Ölphase entfernt;
oder
(c1) aus Gelbildnern und Wirkstoffen eine Matrix zubereitet,
(c2) die Matrix mit einer Kationpolymerlösung versetzt und
(c3) die Mischung auf einen pH-Wert einstellt der oberhalb des pKₛ-Wertes des Kationpo- lymers liegt;
oder
(d1) wässrige Wirkstoffzubereitungen mit Ölkörpern in Gegenwart von Emulgatoren zu O/W-Emulsionen verarbeitet,
(d2) die so erhaltenen Emulsionen mit wässrigen Lösungen anionischer Polymere behandelt,
(d3) die so erhaltene Matrix mit wässrigen Kationpolymerlösungen in Kontakt bringt und
(d4) die so erhaltenen Verkapselungsprodukte von der wässrigen Phase abtrennt;
oder
den Wirkstoff abwechselnd mit Schichten aus unterschiedlich geladenen Polyelektrolyten einhüllt (layer-by-layer-Technologie).
- Gelbildner
   Im Sinne der Erfindung werden als Gelbildner vorzugsweise solche Stoffe in Betracht gezogen, welche die Eigenschaft zeigen in wässriger Lösung bei Temperaturen oberhalb von 40 °C Gele zu bilden. Typische Beispiele hierfür sind Heteropolysaccharide und Proteine. Als thermogelierende Heteropolysaccharide kommen vorzugsweise Agarosen in Frage, welche in Form des aus Rotalgen zu gewinnenden Agar-Agar auch zusammen mit bis zu 30 Gew.-% nicht-gelbildenden Agaropektinen vorliegen können. Hauptbestandteil der Agarosen sind lineare Polysaccharide aus D-Galaktose und 3,6-Anhydro-L-galaktose, die alternierend β-1,3- und β-1,4-glykosidisch verknüpft sind. Die Heteropolysaccharide besitzen vorzugsweise ein Molekulargewicht im Bereich von 110.000 bis 160.000 und sind sowohl farb- als auch geschmacklos. Als Alternativen kommen Pektine, Xanthane (auch Xanthan Gum) sowie deren Mischungen in Frage. Es sind weiterhin solche Typen bevorzugt, die noch in 1-Gew.-%iger wässriger Lösung Gele bilden, die nicht unterhalb von 80 °C schmelzen und sich bereits oberhalb von 40 °C wieder verfestigen. Aus der Gruppe der thermogelierenden Proteine seien exemplarisch die verschiedenen Gelatine-Typen genannt.
- Kationische Polymere
   Geeignete kationische Polymere sind beispielsweise kationische Cellulosederivate, wie z.B. eine quaternierte Hydroxyethylcellulose, die unter der Bezeichnung Polymer JR 400® von Amerchol erhältlich ist, kationische Stärke, Copolymere von Diallylammoniumsalzen und Acrylamiden, quaternierte Vinylpyrrolidon/Vinylimidazol-Polymere, wie z.B. Luviquat® (BASF), Kondensationsprodukte von Polyglycolen und Aminen, quaternierte Kollagenpolypeptide, wie beispielsweise Lauryldimonium Hydroxypropyl Hydrolyzed Collagen (Lamequat®L/Grünau), quaternierte Weizenpolypeptide, Polyethylenimin, kationische Siliconpolymere, wie z.B. Amodimethicone, Copolymere der Adipinsäure und Dimethylaminohydroxypropyldiethylentriamin (Cartaretine®/Sandoz), Copolymere der Acrylsäure mit Dimethyldiallylammoniumchlorid (Merquat® 550/Chemviron), Polyaminopolyamide sowie deren vernetzte wasserlöslichen Polymere, kationische Chitinderivate wie beispielsweise quaterniertes Chitosan, gegebenenfalls mikrokristallin verteilt, Kondensationsprodukte aus Dihalogenalkylen, wie z.B. Dibrombutan mit Bisdialkylaminen, wie z.B. Bis-Dimethylamino-1,3-propan, kationischer Guar-Gum, wie z.B. Jaguar® CBS, Jaguar® C-17, Jaguar® C-16 der Firma Celanese, quaternierte Ammoniumsalz-Polymere, wie z.B. Mirapol® A-15, Mirapol® AD-1, Mirapol® AZ-1 der Firma Miranol.
   Vorzugsweise wird als Verkapselungsmaterial Chitosan eingesetzt. Chitosane stellen Biopolymere dar und werden zur Gruppe der Hydrokolloide gezählt. Chemisch betrachtet handelt es sich um partiell deacetylierte Chitine unterschiedlichen Molekulargewichtes, die den folgenden - idealisierten - Monomerbaustein enthalten: 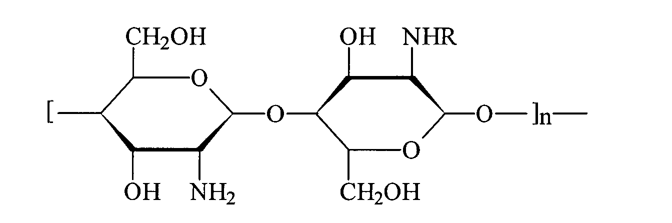
   Im Gegensatz zu den meisten Hydrokolloiden, die im Bereich biologischer pH-Werte negativ geladen sind, stellen Chitosane unter diesen Bedingungen kationische Biopolymere dar. Die positiv geladenen Chitosane können mit entgegengesetzt geladenen Oberflächen in Wechselwirkung treten und werden daher in kosmetischen Haar- und Körperpflegemitteln sowie pharmazeutischen Zubereitungen eingesetzt. Zur Herstellung der Chitosane geht man von Chitin, vorzugsweise den Schalenresten von Krustentieren aus, die als billige Rohstoffe in großen Mengen zur Verfügung stehen. Das Chitin wird dabei in einem Verfahren, das erstmals von Hackmann et al. beschrieben worden ist, üblicherweise zunächst durch Zusatz von Basen deproteiniert, durch Zugabe von Mineralsäuren demineralisiert und schließlich durch Zugabe von starken Basen deacetyliert, wobei die Molekulargewichte über ein breites Spektrum verteilt sein können. Vorzugsweise werden solche Typen eingesetzt, wie die ein durchschnittliches Molekulargewicht von 10.000 bis 500.000 bzw. 800.000 bis 1.200.000 Dalton aufweisen und/oder eine Viskosität nach Brookfield (1 Gew.-%ig in Glycolsäure) unterhalb von 5000 mPas, einen Deacetylierungsgrad im Bereich von 80 bis 88 % und einem Aschegehalt von weniger als 0,3 Gew.-% besitzen. Aus Gründen der besseren Wasserlöslichkeit werden die Chitosane in der Regel in Form ihrer Salze, vorzugsweise als Glycolate eingesetzt.
- Ölphase
   Die Matrix kann vor der Bildung der Membran optional in einer Ölphase dispergiert werden. Als Öle kommen für diesen Zweck beispielsweise Guerbetalkohole auf Basis von Fettalkoholen mit 6 bis 18, vorzugsweise 8 bis 10 Kohlenstoffatomen, Ester von linearen C₆-C₂₂-Fettsäuren mit linearen C₆-C₂₂-Fettalkoholen, Ester von verzweigten C₆-C₁₃-Carbonsäuren mit linearen C₆-C₂₂-Fettalkoholen, wie z.B. Myristylmyristat, Myristylpalmitat, Myristylstearat, Myristylisostearat, Myristyloleat, Myristylbehenat, Myristylerucat, Cetylmyristat, Cetylpalmitat, Cetylstearat, Cetylisostearat, Cetyloleat, Cetylbehenat, Cetylerucat, Stearylmyristat, Stearylpalmitat, Stearylstearat, Stearylisostearat, Stearyloleat, Stearylbehenat, Stearylerucat, Isostearylmyristat, Isostearylpalmitat, Isostearylstearat, Isostearylisostearat, Isostearyloleat, Isostearylbehenat, Isostearyloleat, Oleylmyristat, Oleylpalmitat, Oleylstearat, Oleylisostearat, Oleyloleat, Oleylbehenat, Oleylerucat, Behenylmyristat, Behenylpalmitat, Behenylstearat, Behenylisostearat, Behenyloleat, Behenylbehenat, Behenylerucat, Erucylmyristat, Erucylpalmitat, Erucylstearat, Erucylisostearat, Erucyloleat, Erucylbehenat und Erucylerucat. Daneben eignen sich Ester von linearen C₆-C₂₂-Fettsäuren mit verzweigten Alkoholen, insbesondere 2-Ethylhexanol, Ester von Hydroxycarbonsäuren mit linearen oder verzweigten C₆-C₂₂-Fettalkoholen, insbesondere Dioctyl Malate, Ester von linearen und/oder verzweigten Fettsäuren mit mehrwertigen Alkoholen (wie z.B. Propylenglycol, Dimerdiol oder Trimertriol) und/oder Guerbetalkoholen, Triglyceride auf Basis C₆-C₁₀-Fettsäuren, flüssige Mono-/Di-/Triglycerid-mischungen auf Basis von C₆-C₁₈-Fettsäuren, Ester von C₆-C₂₂-Fettalkoholen und/oder Guerbetalkoholen mit aromatischen Carbonsäuren, insbesondere Benzoesäure, Ester von C₂-C₁₂-Dicarbonsäuren mit linearen oder verzweigten Alkoholen mit 1 bis 22 Kohlenstoffatomen oder Polyolen mit 2 bis 10 Kohlenstoffatomen und 2 bis 6 Hydroxylgruppen, pflanzliche Öle, verzweigte primäre Alkohole, substituierte Cyclohexane, lineare und verzweigte C₆-C₂₂-Fettalkoholcarbonate, Guerbetcarbonate, Ester der Benzoesäure mit linearen und/oder verzweigten C₆-C₂₂-Alkoholen (z.B. Finsolv® TN), lineare oder verzweigte, symmetrische oder unsymmetrische Dialkylether mit 6 bis 22 Kohlenstoffatomen pro Alkylgruppe, Ringöffnungsprodukte von epoxidierten Fettsäureestern mit Polyolen, Siliconöle und/oder aliphatische bzw. naphthenische Kohlenwasserstoffe, wie z.B. wie Squalan, Squalen oder Dialkylcyclohexane in Betracht.
- Anionpolymere
   Die anionische Polymere haben die Aufgabe, mit den Chitosanen Membranen zu bilden. Für diesen Zweck eignen sich vorzugsweise Salze der Alginsäure. Bei der Alginsäure handelt es sich um ein Gemisch carboxylgruppenhaltiger Polysaccharide mit folgendem idealisierten Monomerbaustein: 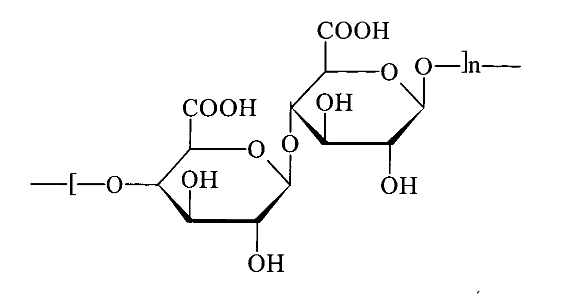
   Das durchschnittliche Molekulargewicht der Alginsäuren bzw. der Alginate liegt im Bereich von 150.000 bis 250.000. Dabei sind als Salze der Alginsäure sowohl deren vollständige als auch deren partiellen Neutralisationsprodukte zu verstehen, insbesondere die Alkalisalze und hierunter vorzugsweise das Natriumalginat ("Algin") sowie die Ammonium-und Erdalkalisalze. besonders bevorzugt sind Mischalginate, wie z.B. Natrium/Magnesium- oder Natrium/Calciumalginate. In einer alternativen Ausführungsform der Erfindung kommen für diesen Zweck jedoch auch anionische Chitosanderivate, wie z.B. Carboxylierungs- und vor allem Succinylierungsprodukte in Frage. Alternativ kommen auch Poly(meth)acrylate mit durchschnittlichen Molekulargewichten im Bereich von 5.000 bis 50.000 Dalton sowie die verschiedenen Carboxymethylcellulosen in Frage. Anstelle der anionischen Polymeren können für die Ausbildung der Hüllmembran auch anionische Tenside oder niedermolekulare anorganische Salze, wie beispielsweise Pyrophosphate eingesetzt werden.
- Herstellverfahren Mikrokapseln
   Zur Herstellung der Mikrokapseln stellt man üblicherweise eine 1 bis 10, vorzugsweise 2 bis 5 Gew.-%ige wässrige Lösung des Gelbildners, vorzugsweise des Agar-Agars her und erhitzt diese unter Rückfluss. In der Siedehitze, vorzugsweise bei 80 bis 100°C, wird eine zweite wässrige Lösung zugegeben, welche das Kationpolymer, vorzugsweise das Chitosan in Mengen von 0,1 bis 2, vorzugsweise 0,25 bis 0,5 Gew.-% und den Wirkstoffen in Mengen von 0,1 bis 25 und insbesondere 0,25 bis 10 Gew.-% enthält; diese Mischung wird als Matrix bezeichnet. Die Beladung der Mikrokapseln mit Wirkstoffen kann daher ebenfalls 0,1 bis 25 Gew.-% bezogen auf das Kapselgewicht betragen. Falls gewünscht, können zu diesem Zeitpunkt zur Viskositätseinstellung auch wasserunlösliche Bestandteile, beispielsweise anorganische Pigmente zugegeben werden, wobei man diese in der Regel in Form von wässrigen oder wässrig/alkoholischen Dispersionen zusetzt. Zur Emulgierung bzw. Dispergierung der Wirkstoffe kann es ferner von Nutzen sein, der Matrix Emulgatoren und/oder Lösungsvermittler hinzuzugeben. Nach der Herstellung der Matrix aus Gelbildner, Kationpolymer und Wirkstoffen kann die Matrix optional in einer Ölphase unter starker Scherung sehr fein dispergiert werden, um bei der nachfolgenden Verkapselung möglichst kleine Teilchen herzustellen. Dabei hat es sich als besonders vorteilhaft erwiesen, die Matrix auf Temperaturen im Bereich von 40 bis 60 °C zu erwärmen, während man die Ölphase auf 10 bis 20 °C kühlt. Im letzten, nun wieder obligatorischen Schritt erfolgt dann die eigentliche Verkapselung, d.h. die Ausbildung der Hüllmembran durch Inkontaktbringen des Kationpolymers in der Matrix mit den anionischen Polymeren. Hierzu empfiehlt es sich, die gegebenenfalls in der Ölphase dispergierte Matrix bei einer Temperatur im Bereich von 40 bis 100, vorzugsweise 50 bis 60 °C mit einer wässrigen, etwa 1 bis 50 und vorzugsweise 10 bis 15 Gew.-%ige wässrigen Lösung des Anionpolymers zu behandeln und dabei - falls erforderlich - gleichzeitig oder nachträglich die Ölphase zu entfernen. Die dabei resultierenden wässrigen Zubereitungen weisen in der Regel einen Mikrokapselgehalt im Bereich von 1 bis 10 Gew.-% auf. In manchen Fällen kann es dabei von Vorteil sein, wenn die Lösung der Polymeren weitere Inhaltsstoffe, beispielsweise Emulgatoren oder Konservierungsmittel enthält. Nach Filtration werden Mikrokapseln erhalten, welche im Mittel einen Durchmesser im Bereich von vorzugsweise etwa 0,01 bis 1 mm aufweisen. Es empfiehlt sich, die Kapseln zu sieben, um eine möglichst gleichmäßige Größenverteilung sicherzustellen. Die so erhaltenen Mikrokapseln können im herstellungsbedingten Rahmen eine beliebige Form aufweisen, sie sind jedoch bevorzugt näherungsweise kugelförmig. Alternativ kann man die Anionpolymere auch zur Herstellung der Matrix einsetzen und die Verkapselung mit den Kationpolymeren, speziell den Chitosanen durchführen.
   Alternativ kann die Verkapselung auch unter ausschließlicher Verwendung von Kationpolymeren erfolgen, wobei man sich deren Eigenschaft zu Nutze macht, bei pH-Werten oberhalb des pKs-Wertes zu koagulieren.
   In einem zweiten alternativen Verfahren wird zur Herstellung der erfindungsgemäßen Mikrokapseln wird zunächst eine O/W-Emulsion zubereitet, welche neben dem Ölkörper, Wasser und den Wirkstoffen eine wirksame Menge Emulgator enthält. Zur Herstellung der Matrix wird diese Zubereitung unter starkem Rühren mit einer entsprechenden Menge einer wässrigen Anionpolymerlösung versetzt. Die Membranbildung erfolgt durch Zugabe der Chitosanlösung. Der gesamte Vorgang findet vorzugsweise im schwach sauren Bereich bei pH = 3 bis 4 statt. Falls erforderlich erfolgt die pH-Einstellung durch Zugabe von Mineralsäure. Nach der Membranbildung wird der pH-Wert auf 5 bis 6 angehoben, beispielsweise durch Zugabe von Triethanolamin oder einer anderen Base. Hierbei kommt es zu einem Anstieg der Viskosität, die durch Zugabe von weiteren Verdickungsmitteln, wie z.B. Polysacchariden, insbesondere Xanthan-Gum, Guar-Guar, Agar-Agar, Alginaten und Tylosen, Carboxymethylcellulose und Hydroxyethylcellulose, höhermolekularen Polyethylenglycolmono- und -diestern von Fettsäuren, Polyacrylaten, Polyacrylamiden und dergleichen noch unterstützt werden kann. Abschließend werden die Mikrokapseln von der wässrigen Phase beispielsweise durch Dekantieren, Filtrieren oder Zentrifugieren abgetrennt.
   In einem dritten alternativen Verfahren erfolgt die Bildung der Mikrokapseln um einen vorzugsweise festen, beispielsweise kristallinen Kern, indem dieser schichtweise mit entgegengesetzt geladenen Polyelektrolyten eingehüllt wird. In diesem Zusammenhang sei auf das Europäische Patent **EP 1064088 B1** (Max-Planck Gesellschaft) verwiesen.

### Gewerbliche Anwendbarkeit

Ein weiterer Gegenstand der vorliegenden Erfindung betrifft die Verwendung von Wirkstoffen ausgewählt aus der Gruppe, die gebildet wird von Tocopherolen, Carotinverbindungen und Polyphenolen, zum Schutz von physiologisch aktiven Fettsäuren oder deren Ester vor oxidativer Metabolisierung bei oraler Aufnahme.

### Beispiele

### Rezepturbeispiele 1 bis 6

In der nachfolgenden Tabelle 1 finden sich die Rezepturbeispiele 1 bis 6. Die erfindungsgemäßen Zubereitungen liegen als Pulver vor und werden üblicherweise in Beuteln mit einem Inhalt von 10 g in Verkehr gebracht.

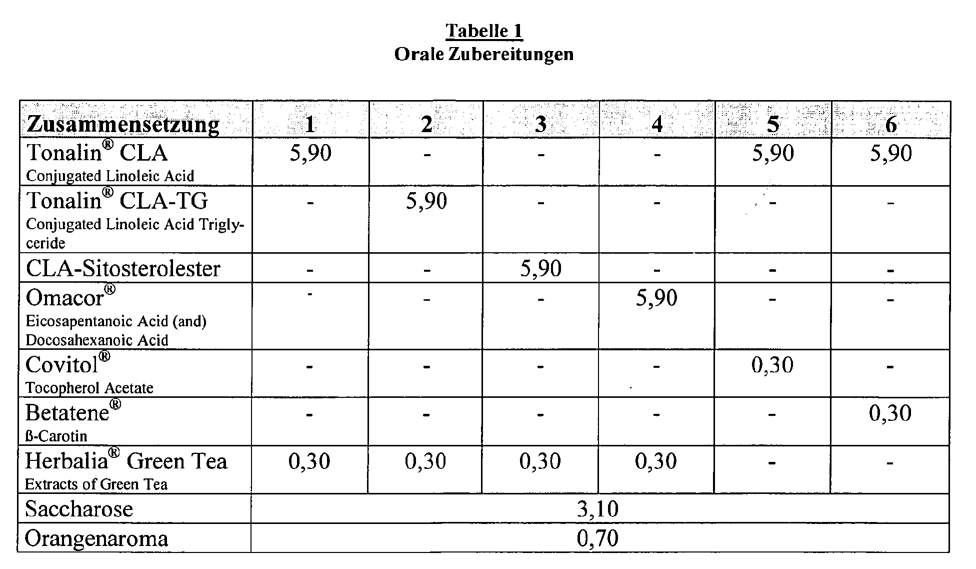

### Beispiel 7

### Herstellung von mikroverkapselten Zubereitungen zur oralen Aufnahme

In einem 500-ml-Dreihalskolben mit Rührer und Rückflusskühler wurden in der Siedehitze 3 g Agar-Agar in 200 ml Wasser gelöst. Anschließend wurde die Mischung innerhalb von etwa 30 min unter starkem Rühren zunächst mit einer Lösung von 10 g Glycerin 90 ml Wasser und dann mit einer Zubereitung von 2,5 g Natriumalginat in Form einer 10 Gew.-%igen wässrigen Lösung, 1,0 g konjugierte Linolsäure (Tonalin® CLA, Cognis), 0,5 g Tocopherol (Covitox®, Cognis), 0,5 g getrockneter *Camellia sinensis* Extrakt, und 0,5 g Polysorbat-20 (Tween® 20, ICI) in 64 g Wasser versetzt. Die erhaltene Matrix wurde filtriert, auf 60 °C erwärmt und in eine 1 Gew.-%ige Lösung von Chitosanglycolat in Wasser getropft. Zum Erhalt von Mikrokapseln gleichen Durchmessers wurden die Zubereitungen anschließend gesiebt.

## Patentansprüche

1. Zubereitungen für die orale Aufnahme, enthaltend
(a) physiologisch aktive Fettsäuren oder deren Ester und
(b) Wirkstoffe, die die Fettsäuren vor oxidativer Metabolisierung schützen.

2. Zubereitungen nach Anspruch 1, **dadurch gekennzeichnet, dass** sie als Komponente (a) Fettsäuren mit 18 bis 26 Kohlenstoffatomen und 2 bis 6 Doppelbindungen enthalten.

3. Zubereitungen nach den Ansprüchen 1 und/oder 2, **dadurch gekennzeichnet, dass** sie als Komponente (a) Ester der Fettsäuren mit Glycerin oder Sterol enthalten.

4. Zubereitungen nach mindestens einem der Ansprüche 1 bis 3, **dadurch gekennzeichnet, dass** sie als Komponente (a) konjugierte Linolsäure oder omega-3-Fettsäuren enthalten.

5. Zubereitungen nach mindestens einem der Ansprüche 1 bis 4, **dadurch gekennzeichnet, dass** sie als Komponente (b) Wirkstoffe enthalten, die ausgewählt sind aus der Gruppe, die gebildet wird von Tocopherolen, Carotinverbindungen und Polyphenolen.

6. Zubereitungen nach Anspruch 5, **dadurch gekennzeichnet, dass** sie als Komponente (b) Polyphenole enthalten, die ausgewählt sind aus der Gruppe, die gebildet wird von Catechinen, Flavonoiden und oligomeren Procyanolidinen (OPC).

7. Zubereitungen nach den Ansprüchen 5 und/oder 6, **dadurch gekennzeichnet, dass** sie Pflanzenextrakte enthalten, die reich an Polyphenolen sind.

8. Zubereitungen nach mindestens einem der Ansprüche 1 bis 7, **dadurch gekennzeichnet, dass** sie die Komponenten (a) und (b) im Gewichtsverhältnis 99,9 : 0,1 bis 80 : 20 enthalten.

9. Zubereitungen nach mindestens einem der Ansprüche 1 bis 8, **dadurch gekennzeichnet, dass** sie makro- oder mikroverkapselt vorliegen.

10. Nahrungsmittelzubereitungen, **dadurch gekennzeichnet, dass** sie einen wirksamen Gehalt an physiologisch aktive Fettsäuren oder deren Ester aufweisen sowie Wirkstoffe enthalten, die die Fettsäuren vor oxidativer Metabolisierung schützen.

11. Nahrungsmittelzubereitungen, **dadurch gekennzeichnet, dass** es sich um Milchprodukte oder Getränke handelt.

12. Verwendung von Wirkstoffen ausgewählt aus der Gruppe, die gebildet wird von Tocopherolen, Carotinverbindungen und Polyphenolen, zum Schutz von physiologisch aktiven Fettsäuren oder deren Ester vor oxidativer Metabolisierung bei oraler Aufnahme.
